# EUROPEAN PATENT APPLICATION

(11) **EP 1 223 710 A2**
(43) Date of publication of application: **17.07.2002**
(21) Application number: 01660211.2
(22) Date of filing: 20.11.2001
(51) Int. Cl.: H04L 12/40, G05B 19/00

(54) **A control system for actuators and a method for controlling actuators**

(30) Priority: 20.11.2000 FI 20002534
(71) Applicant: Vacon Oyj, 65380 Vaasa (FI)
(72) Inventor: Vesti, Jorma, 65350 Vaasa (FI); Rantala, Petri, 65320 Vaasa (FI)
(74) Representative: Pursiainen, Timo Pekka

(57) **Abstract**

The invention relates to a control system for actuators, which comprises a bidirectional data transmission bus (1) for the transmission of information between nodes (2a-2e) coupled to the data transmission bus. The system comprises means for connecting at least one node (2a-2e) in a data transmission connection with at least one actuator (3a-3d, 4). At least one node (2a-2e) comprises at least a first interface (5a), means (11) for receiving information transmitted on the data transmission bus, means (8, 9, 14, 15) for transmitting information via at least a first interface (5a) to the data transmission bus (1), means (13) for detecting transmission errors, and means (8, 9, 14, 15) for informing the other nodes (2a-2e) coupled to the data transmission bus about transmission errors via the data transmission bus (1).

## Description

The present invention relates to a system for controlling actuators according to the preamble of the appended claim 1. The invention also relates to a method for controlling actuators according to the preamble of the appended claim 6, as well as a node according to the preamble of the appended claim 12.

In distributed control systems, actuators connected to the process to be controlled are provided with a control unit for controlling the actuator. Furthermore, the control unit is connected to a communication unit for data transmission between the actuator and the other parts of the system. In addition, the system may comprise a monitoring room where information obtained from different actuators is collected and presented to the operating personnel. For controlling the process, information obtained from the actuators is also used for control calculations and for forming controlled variables for the actuators controlling the process. The actuators include, for example, engines, regulators, pumps, measuring devices, *etc.*

The conditions in various industrial production plants are normally very susceptible to failures in view of the control system. On the other hand, to secure that the operation of such a control system is as reliable as possible, the transmission of information should be made as flawless as possible. Eventual transmission errors should also be detectable as well as possible, because the effect of incorrect information on the process may be very harmful. One very vulnerable location in the control system is related to the actuators and particularly the transmission bus between the actuators. The control units and the transmission bus for the actuators must be placed close to the process, where *e.g.* high disturbance currents may develop when the process is running, for example when the engines are being started. Demands on the control system are also set by other ambient conditions, such as high temperatures and high humidity.

International patent application WO 91/01520 presents a system and a method for controlling actuators. In this system, a master device can control several slave devices connected to the master device. For accomplishing this, the master device is provided with one or more serial buses, to which the devices to be controlled are coupled. This system is intended particularly for the control of servo motors, but it can also be used for controlling other actuators. Each device coupled to the serial bus is provided with two addresses: a primary address and a secondary address. The point of this is that the devices can be divided into definite groups in such a way that the actuators belonging to the same group can monitor data transmitted to another actuator belonging to this group. Furthermore, in this system, the computer controlling the system transmits impulse commands on the buses at intervals, wherein each actuator coupled to the bus receives this command and responds to it. It is thus possible to find out which actuators are in operation. The publication also presents error handling for data to be transmitted on the serial bus. However, this error check is not fully in real time, but it is always performed in connection with said impulse transmissions. Thus, the time taken in detecting a malfunction may be significant in view of the flawless operation of the process.

German patent publication DE 4035459 presents another solution related to a serial bus. In this publication, the device to be connected to the serial bus also comprises a secondary serial bus, to which it is possible to connect more devices to be controlled via the serial bus. This secondary serial bus is arranged in such a way that the devices coupled to it compose a sort of address space in relation to this node. Thus, the node identifies the address data from the commands coming in via the primary serial bus, wherein if the address data matches with the address space of the secondary bus, the node will connect the command from the primary bus to the secondary bus. Using such a node, it is thus possible to increase the address space of the primary bus in a certain way by forming secondary buses. However, the devices connected to the secondary bus cannot directly communicate with the other parts of the system via the primary bus, but all the communication takes place via said node. Thus, in case the node is damaged, it is not possible to transmit data between the devices coupled to the secondary bus of the node and the other parts of the system.

It is an aim of the present invention to achieve a method for controlling actuators and a control system for actuators, whose resistance to failures and reliability can be improved when compared with systems of prior art. The invention is based on the idea that nodes are coupled in series to the data transmission bus in such a way that each receiving node passes the information transmitted on the data transmission bus forward to the next actuator, and the transmitting actuator transmits the same information simultaneously in both directions on the data transmission bus. All the devices coupled to the bus listen to transmissions by other devices and inform about transmission errors possibly detected by them. The system according to the present invention is primarily characterized in what will be presented in the characterizing part of the appended claim 1. The method according to the present invention is primarily characterized in what will be presented in the characterizing part of the appended claim 6. Further, the node according to the present invention is primarily characterized in what will be presented in the characterizing part of the appended claim 12.

The present invention shows remarkable advantages compared to solutions of prior art. Using the method according to the invention, it is possible to improve the resistance of the system to failures, and to accelerate its reaction to malfunctions. In the system applying the method of the invention, the devices to be coupled to the bus can be configured in a flexible way, for example for the reason that the configuration data is not dependent on the mutual order or location of the devices coupled to the bus on the bus. Furthermore, the encoding method used in the system according to the invention has the advantage that the packet length data is not interpreted to be too long even in error situations, wherein the error situation will be detected, at the latest, by the end of a packet. Thus, the receiving device will not remain waiting for the end of the packet, even if the device had received the length data incorrectly.

The invention will now be described with reference to the appended drawings, in which
- Fig. 1: shows the system according to a preferred embodiment of the invention in a reduced block chart,
- Fig. 2: shows, in a reduced block chart, a node to be used in the system according to a preferred embodiment of the invention, and
- Fig. 3: shows the structure of an advantageous data transmission packet which can be applied in the system according to the invention.

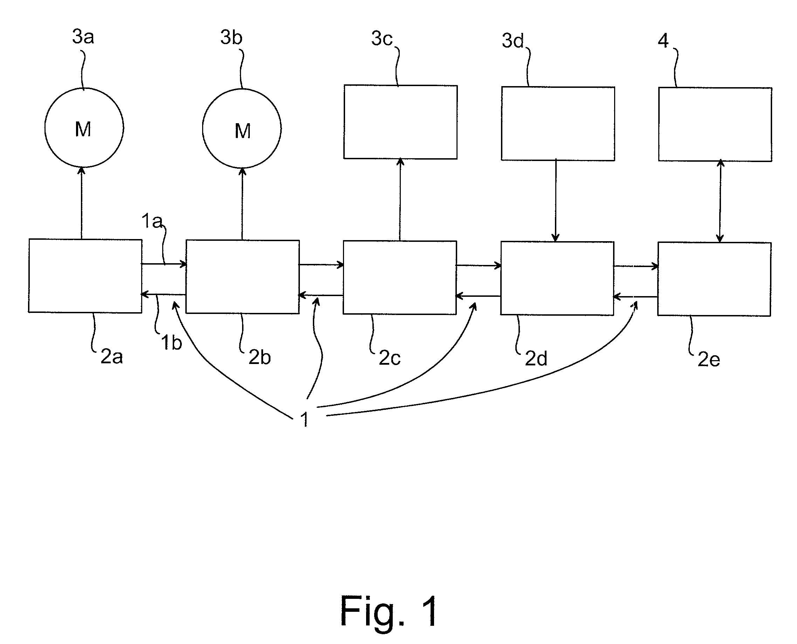

Figure 1 shows a system complying with a preferred embodiment of the invention. It comprises a data transmission bus 1, nodes 2a-2e being connected to the same. These nodes 2a-2e are provided *e.g.* in connection with actuators 3a-3d in the process, wherein data can be transmitted between the actuator 3a-3d and the other parts of the process by means of the data transmission bus 1 and the nodes 2a-2e. The actuators 3a-3d can be actuators known as such. The direction of data transmission can be from the data transmission bus 1 to the actuator 3a-3d (*e.g*. engines), from the actuator 3a-3d to the data transmission bus 1 (*e.g.* measuring devices), or in both directions (*e.g*. regulators). Furthermore, the system normally comprises monitoring equipment 4 which can be used to monitor the state of the process and to perform control operations, if necessary.

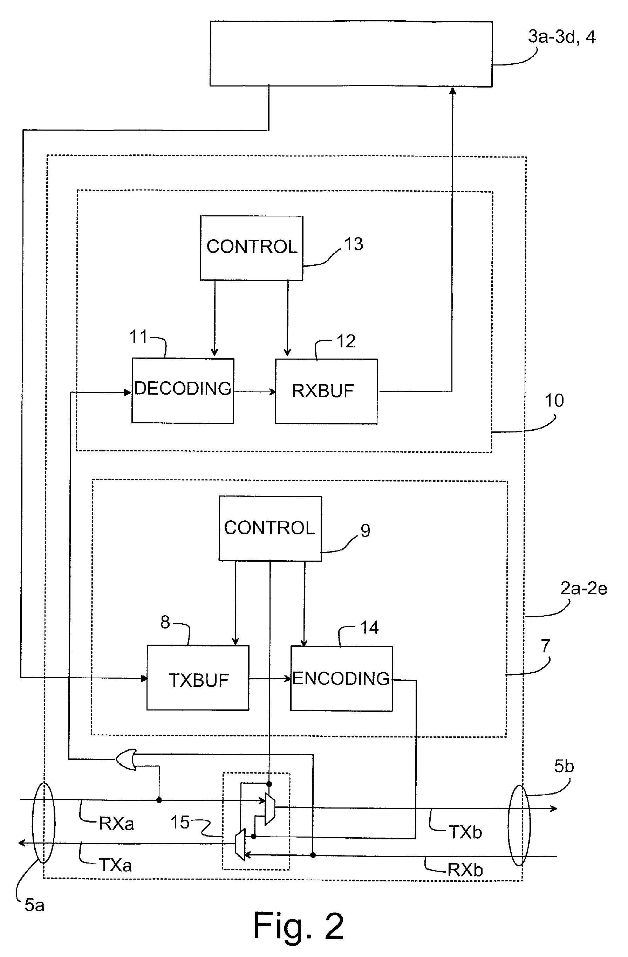

In the system according to an advantageous embodiment of the invention, the data transmission bus 1 is implemented as a bidirectional bus in such a way that it comprises one conductor 1a, 1b for each direction of data transmission between two nodes. The nodes 2a-2e connected to the data transmission bus 1 are concatenated in series. In the chain, each node 2a-2e coupled to the data transmission bus 1 preferably comprises two interfaces 5a, 5b with two conductors (Fig. 2). At each interface 5a, 5b, one conductor is a transmitting conductor TXa, TXb and one conductor is a receiving conductor RXa, RXb for the node. The node can thus listen to the chain in both directions and, correspondingly, transmit in both directions in the chain. However, in the nodes coupled to the ends of the chain (indicated with references 2a, 2e in the appended Fig. 1), only one of these two interfaces 5a, 5b is used, wherein these devices listen and transmit in one direction only. Nevertheless, in the devices in between the chain (indicated with references 2b, 2c, 2d), both of the interfaces 5a, 5b are used. When the node 2a-2e is in the receiving state, a data transmission connection is formed between the interfaces 5a, 5b in such a way that information coming into the receiving conductor RXa of one interface is transmitted to the transmitting conductor TXa of the other interface. Thus, the information transmitted by one node can proceed from the node in both directions throughout the chain.

The following is a description on the operation of the method according to a preferred embodiment of the invention in an example system as shown in Fig. 1. The nodes 2a-2e are allocated identifications ID1-ID5, for example as a binary digit of 6 bits, wherein the identification may range from 0 to 63. Some of the identifications may be allocated for various special transmissions. For example, one identification can be allocated for transmissions intended for all the nodes, wherein this special identification is set as the receiver identification in the packet to be transmitted on the data transmission bus. Furthermore, the devices can be divided into groups on the basis of the identifications, wherein some of the identifications are reserved as group identifications. Thus, a packet equipped with such a group identification is processed in the devices in which this group identification is configured. These situations will be described in more detail below in this description, which is incorporated herein by reference.

Let us assume that the system is preliminarily configured by setting the node 2a coupled to the first end of the chain as a master station, wherein the other nodes 2b, 2c are set to act as so-called slave stations. The nodes 2a-2e coupled to the data transmission bus can be configured on various levels of hierarchy, irrespective of the coupling or the location of the node 2a-2e. Thus, the devices on a higher level of hierarchy can be allocated, for example, a transmission turn more often than the devices 2a-2e on a lower level of hierarchy. It is thus easy to take into account the larger data transmission capacity which is possibly required by critical elements in the system. The configuration of the system can be changed, if necessary. The configuration data can be transmitted to the nodes 2a-2e, for example, from a monitoring room 4. Thus, one or more configuration messages are transmitted from the monitoring room 4. The configuration message can be node specific, wherein the configuration message contains the identification of the node 2a-2e to be configured at the time, as well as the configuration data. A required number of these configuration messages are transmitted. However, it is obvious that the configuration can also be performed by another method known as such.

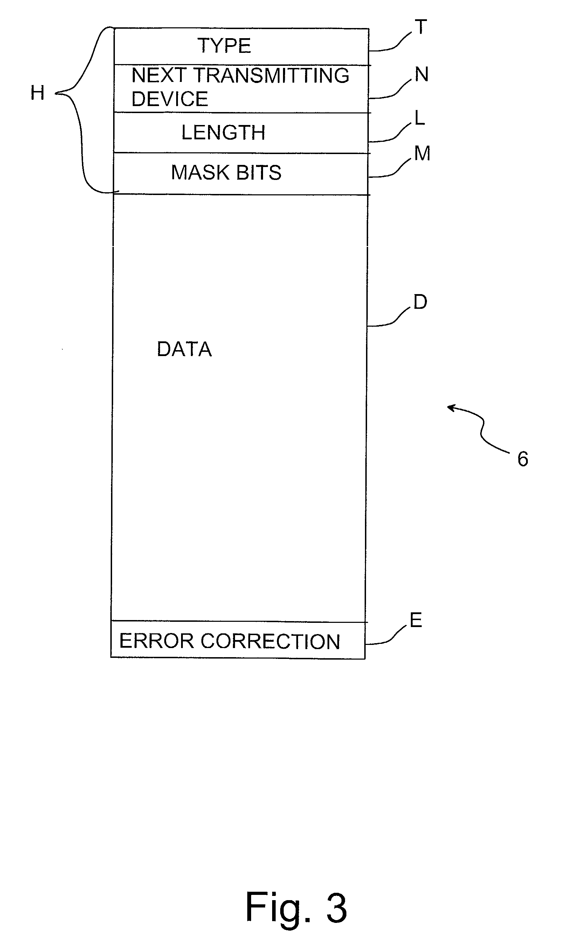

After the configuration, it is possible to transmit data between the nodes 2a-2e in the system. The need for communication may arise, for example, from a change in the state of an actuator 3a-3d, a change in the process parameters made in the monitoring room 4, or the like. For the communication, one or more data transmission packets are preferably formed in the node 2a, one example of a packet being shown in Fig. 3. The header H of the packet 6 preferably contains data about the packet type T, the identification N of the device which is next in turn to transmit, packet length data L, and mask bits M. In addition, the packet 6 contains a data field D for the transmission of payload information and error check data E for detecting possible transmission errors. The packet type data can be used to indicate, for example, whether the packet contains data to be transmitted or whether it indicates that the transmission turn is to be shifted to another device. A mere transmission turn shift packet may be used, for example, when a node 2a-2e has the transmission turn but no data to be transmitted. In such a case, this node 2a-2e transmits a packet in which the shift in the turn to transmit is indicated by the type data T and the device next in turn to transmit is indicated by the respective device identification N. The length of such a packet is preferably set to be as short as possible, to avoid unnecessary delays in the shift of the turn to transmit. Mask bits can be used to determine the receiver and to determine the receiver group and broadcast transmissions already mentioned above in this description. In the mask bits, certain bits are thus allocated to indicate the group. If the nodes are divided into, for example, four groups, two bits will thus be needed to indicate the different groups. In addition, one bit will be needed to indicate that the transmission is intended for a specific group. A broadcast transmission intended for all the nodes 2a-2e can be indicated by one mask bit. Other mask bits can also be used to identify the receiver when the transmission is not a broadcast or group transmission. In some applications, the receiver can be identified by the above-mentioned identification N of the device next in turn to transmit, but in this case, it is not possible to implement the hierarchy in the same way as by using specific data for identifying the receiver.

If, for example in the system of Fig. 1, the point of operation of a regulator 3e is changed in the monitoring room 4, the new parameters are transmitted to a node 2c coupled to the monitoring room 4, to be transmitted to the data transmission bus 1. On the basis of the parameter data, a data transmission packet is formed in the transmission block 7 of the node 2a-2e and stored in the transmission buffer 8 (Fig. 2). In the data transmission packet, the type data is set, for example, to be the transmission of parameter data, and the new parameters are set in the data field of the packet. The packet length data is determined *e.g.* on the basis of the data to be transmitted. If the other fields in the packet have a constant length, the lengths of these fields do not necessarily need to be indicated in the length data, but they are automatically taken into account by the receiving devices 2a, 2b, 2c, 2d. In the mask bits, the data indicates that the transmission is not a broadcast or group transmission but a transmission intended for a specific node 2e. This receiving node is also preferably identified in the mask bits. Furthermore, the controller 9 of the transmission block computes error check data, *e.g*. a CRC sum (Cyclic Redundancy Check) and sets it in the error check data field E of the packet. When the packet is ready for transmission, the node 2c will wait for its turn to transmit. Thus, the receiving block 10 of the node listens to the receiving conductors of both interfaces 5a, 5b to detect possible data transmission packets.

At the stage when a packet is detected, the receiving block 10 of the node decodes the packet in a decoding block 11 and stores it in a receiving buffer 12. After this, the controller 13 of the receiving block examines the mask bits to determine the need for processing the received packet. Furthermore, the controller 13 of the receiving block examines whether the data in the packet, indicating the identification N of the node next in turn to transmit, matches with the identification of the node 2c in question. If the identifications match, the node 2c can start to transmit. In other cases, the node 2c takes the measures possibly required by the received packet and continues to receive.

Having a turn to transmit, the controller 9 of the transmission block of the node transmits the packet to be transmitted to an encoding block 14, in which the packet is encoded to be transmitted on the data transmission bus. The encoding method used is preferably *e.g*. TSFO encoding, but also other encoding methods can be used. The TSFO encoding has, for example, the advantage that transmission errors do not increase the packet length data, wherein the receiving devices will not remain waiting for the end of a packet in vain. The encoding is performed by transmitting not more than a given maximum number of successive bits with the same value to the data transmission bus during the normal operation. This can be arranged, for example, by drawing up an encoding table, on the basis of which the bit string to be encoded is replaced with another given hit string. Table 1 shows an example of such an encoding table, in which one bit string of six bits is drawn up for each possible bit string of four bits to be encoded. These bit strings of six bits, which are thus transmitted to the data transmission bus, are selected in such a way that no combination of these bit strings of six bits will produce a bit string with more than four same bits in succession. Thus, the bit string to be encoded can be any one, and said condition of successive same bits is still met. It is obvious that Table 1 is only one possible example of implementing the bus encoding, but in practical applications, it is also possible to use other tables in which said condition is met. Furthermore, different applications may have different requirements for the number of successive bits which can be the same in the bit string to be transmitted to the data transmission bus. In the receiving device, the operations inverse to the transmission are performed. Thus, in the example situation of Table 1, the bit strings of six bits are examined in the receiving device. Thus, according to Table 1, these bit strings of six bits are converted to bit strings of four bits which, in faultless data transmission, correspond to the bit string to be encoded. This kind of encoding has, for example, the advantage that any information to be encoded in binary format will produce a bit string of constant length to be transmitted to the data transmission bus, wherein it is possible to use packets of a fixed size in the transmission.

**TABLE 1**

| Bit string to be encoded | | Bit string to be transmitted |
|---|---|---|
| Hexadecimal number | Binary digit | |
| 0 | 0000 | 011010 |
| 1 | 0001 | 101001 |
| 2 | 0010 | 011001 |
| 3 | 0011 | 110001 |
| 4 | 0100 | 001101 |
| 5 | 0101 | 101100 |
| 6 | 0110 | 011100 |
| 7 | 0111 | 110100 |
| 8 | 1000 | 001011 |
| 9 | 1001 | 100011 |
| A | 1010 | 010011 |
| B | 1011 | 110010 |
| C | 1100 | 001110 |
| D | 1101 | 100110 |
| E | 1110 | 010110 |
| F | 1111 | 100101 |

The information to be encoded may be led to the encoding block in either serial or parallel format, which is known as such. If the information to be encoded is in serial format, the encoding block 14 preferably comprises means (not shown) for converting the information to bit strings of fixed size *(e.g.* 4 bits) which are encoded. The information is transmitted in serial format to the data transmission bus, wherein the encoding block 14 converts the encoded information to serial format, *e.g.* by means of shift registers or the like.

For the time of the transmission, the controller 9 of the transmission block changes the transmission multiplexer 15 to a state in which an encoded packet is transmitted to the transmitting conductors of both the interfaces 5a, 5b. Thus, the output line 17b of the encoding block 14 is coupled via the transmission multiplexer 15 to the transmitting conductors TXa, TXb of the interface 5a, 5b. At other times, the transmission multiplexer 15 is set in a state in which a data transmission connection is formed between the transmitting conductors of the interface 5a, 5b and the receiving conductors of the interface 5a, 5b.

When one node is transmitting, the other nodes are coupled to the receiving state. Thus, the receiving nodes preferably perform error checking for the received packet, wherein the controller of the receiving block computes a checksum on the basis of the information received in the packet 6 and compares it with the error check data (checksum) received in the packet. If the checksums match, it can be assumed that the packet was faultlessly received and the processing of the packet can be continued. After this, at least that part which contains data about the receiver of the packet is decoded. In practice, the whole header field H is preferably decoded. Each node which has received the packet examines, preferably on the basis of the mask bits M, whether the packet was addressed to the respective node. If the packet was intended to be received by the respective node, the data field D is also decoded. In some applications, the information contained in the packet must be decoded before the error checking, so that the necessary checksums can be computed and compared with the error check data contained in the packet. Furthermore, the error checking can be implemented by forming, at the transmission stage, the error check data of only a part of the packet to be transmitted, wherein, in the error checking at the receiving stage, only these parts of the packet used in the formation of the error check data will be used.

In case a difference is detected in the comparison of error checksums between the computed and received checksums, it is assumed that the packet was not correctly received. Thus, the following steps are taken in the node 2a-2e according to an advantageous embodiment of the invention. The controller 9 of the transmission block changes the transmission multiplexer 15 to a state in which the communication is disconnected between the receiving conductor RXa of the first interface 5a and the transmitting conductor TXb of the second interface 5b, and, correspondingly, between the receiving conductor RXb of the second interface 5b and the transmitting conductor TXa of the first interface. The transmitting conductors TXa, TXb are preferably set in a logical 1-state for a predetermined time. This time is longer than the time mentioned in connection with the encoding and required for the transmission of a given maximum number of the same bits. Thus, the quantity exceeding the maximum number of the same bits is received by the other receiving blocks of the nodes in the chain. As a result, the nodes detect an error situation and will reject this incorrect packet. Also, the receiving block of the node that transmitted the packet will receive an incoming signal even during the transmission, or will start to receive substantially immediately after the end of the transmission of the packet, and will detect the error situation on the basis of these successive bits. In this case, the transmission of the packet will be started over. Consequently, the node that transmitted the packet will not start to transmit a new packet immediately after the transmission of the preceding packet but will wait for a while so that the receiving nodes can detect and inform about possible transmission errors. In this way, it is possible to start the retransmission of an incorrectly received packet as soon as possible, and separate acknowledgement messages are not necessarily needed. Because the node that transmitted the packet knows which packet the error notice relates to, there is no need to number the packets and the acknowledgements, which will also reduce the need for communication on the channel.

In a situation in which the node in turn to transmit is transmitting the last packet to be transmitted at the time, the node sets the identification of the node next in turn to transmit in the field N allocated for this purpose in the packet. Thus, the node in question will know to start the transmission of packets, if necessary. In an error situation, also the node next in turn to transmit will detect the error situation, wherein the following steps are preferably taken. The node next in turn to transmit will not start the transmission of its own packets but will wait for the transmission by the node which transmitted the packet in which the error situation occurred. First after the packet has been correctly transmitted, the node next in turn to transmit will start to transmit.

In the system according to the present invention, it is possible to arrange the configuration of the nodes 2a-2e in a flexible way. The identification for each node 2a-2e can be selected from vacant identifications, irrespective of the location where the node is to be coupled in the bus. Consequently, the nodes 2a-2e do not need to be located in an order according to the identifications. The nodes can be prioritized by setting a more frequent transmission interval for nodes with a higher priority than for nodes with a lower priority. This can be preferably arranged by providing each node 2a-2e with a table or the like where the priority, transmission interval or other corresponding data is stored for the different nodes. Thus, each node monitors, on the basis of the transmission turn data in the received packets, which device is to transmit each time. When a node 2a-2e has the turn to transmit, it will examine, for example by means of timers, which node 2a-2e is next in turn to transmit. The transmitting node adds the identification of this node, next in turn to transmit, in the packet to be transmitted.

The operations of the method according to the invention can be largely implemented in the controller 13 of the receiving block and the controller 9 of the transmission block of the node. Although these controllers 9, 13 are presented in this description and in the appended drawings to be separate, it is obvious that, in practical applications, they can also be implemented in one controller, such as a microprocessor, a microcontroller unit, or the like. Furthermore, in the implementation of the different elements in the receiving block and the transmission block, it is possible to use, for example, application specific integrated circuits (ASIC), separate logic circuits, or the like.

Although five nodes 2a-2e are presented in the description of the system according to an advantageous embodiment of the invention, it is obvious that the number of nodes to be coupled to the bus 1 can also be greater or smaller than five. The number of actuators may also vary in different applications.

The invention can also be applied in such a way that the nodes 2a-2e have only one interface 5a instead of two interfaces 5a, 5b. In this case, the nodes 2a-2e can be coupled in series *i.e.* in a ring, wherein information can be transmitted between all the nodes.

Furthermore, the invention can also be applied in such systems, in which only one node transmits information to other nodes. In such an application, these receiving nodes primarily transmit by informing about error situations, by setting the bus in a specific state for a given time, as presented above in this description.

It is obvious that the present invention is not limited solely to the above-presented embodiments, but it can be modified within the scope of the appended claims.

## Claims

1. A system for controlling actuators, comprising a bidirectional data transmission bus (1) for the transmission of information between nodes (2a-2e) connected to the data transmission bus, and which system comprises means for coupling at least one node (2a-2e) in a data transmission connection with at least one actuator (3a-3d, 4), **characterized in that** at least one node (2a-2e) comprises at least a first interface (5a), means (11) for receiving information to be transmitted on the data transmission bus, means (8, 9, 14, 15) for transmitting information via at least the first interface (5a) to the data transmission bus (1), means (13) for detecting transmission errors, and means (8, 9, 14, 15) for informing about transmission errors via the data transmission bus (1) to the other nodes (2a-2e) coupled to the data transmission bus.

2. The system according to claim 1, **characterized in that** at least one node (2a-2e) also comprises at least a second interface (5b) and means (9, 15) for transferring information to be transmitted on the data transmission bus between said first (5a) and second interfaces (5b).

3. The system according to claim 1 or 2, **characterized in that** the information is arranged to be transmitted in one or more packets (6) comprising at least a header field (H), a data field (D) and an error check field (E).

4. The system according to claim 3, **characterized in that** the means for detecting transmission errors comprise means (13) for determining error check data on the basis of information contained in the packet (6) and means (13) for comparing said error check data and the information contained in the error check field to detect possible transmission errors, and that the informing about the transmission errors is arranged to take place substantially after the detection of the transmission errors.

5. The system according to any of the claims 1 to 4, **characterized in that** the nodes (2a-2e) are coupled in series on the data transmission bus.

6. A method for controlling actuators, in which information is transmitted bidirectionally between nodes (2a-2e) coupled to a data transmission bus (1), and in which method at least one node (2a-2e) is coupled to a data transmission connection with at least one actuator (3a-3d, 4), **characterized in that** information is transmitted between nodes (2a-2e) and the data transmission bus (1) via at least a first interface (5a), information transmitted on the bus is received in the nodes (2a-2e), information is transmitted by a transmitting node (2a-2e) via at least the first interface (5a) to the data transmission bus (1), eventual transmission errors are examined on the basis of the received information, and the other nodes (2a-2e) coupled to the data transmission bus (1) are informed about detected transmission errors via the data transmission bus (1).

7. The method according to claim 4, **characterized in that** at least one node (2a-2e) is also provided with at least a second interface (5b) and that information to be transmitted on the data transmission bus (1) is transmitted between said first (5a) and second interfaces (5b) in said node (2a-2e).

8. The method according to claim 4 or 5, **characterized in that** information is transmitted in one or more packets (6) comprising at least a header field (H), a data field (D) and an error check field (E).

9. The method according to claim 6, **characterized in that** the error check data is determined on the basis of information contained in the packet (6), and said error check data and the information contained in the error check field (E) are compared in order to detect possible transmission errors, and that transmission errors are reported substantially immediately after the detection of the transmission errors.

10. The method according to any of the claims 6 to 9, **characterized in that** in the method, information is transmitted in bits, that the greatest allowable number of successive bits with the same value is determined, and that the transmission errors are reported by setting, in the node (2a-2e) that detected the transmission error, the data transmission bus (1) to a certain value for a time longer than the time taken for transmitting said greatest allowable number of bits with the same value.

11. The method according to any of the claims 6 to 10, **characterized in that** the nodes (2a-2e) are coupled in series on the data transmission bus.

12. A node (2a-2e) to be used in a system for controlling actuators, comprising a bidirectional data transmission bus (1) for the transmission of information between nodes (2a-2e) coupled to the data transmission bus, and which system comprises means for coupling at least one node (2a-2e) in a data transmission connection with at least one actuator (3a-3d, 4), **characterized in that** the node (2a-2e) comprises at least a first interface (5a), means (11) for receiving information transmitted on the data transmission bus, means (8, 9, 14, 15) for transmitting information via at least the first interface (5a) to the data transmission bus (1), means (13) for detecting transmission errors, and means (8, 9, 14, 15) for informing other nodes (2a-2e) coupled to the data transmission bus about transmission errors via the data transmission bus (1).

13. The node according to claim 12, **characterized in that** it also comprises at least a second interface (5b) and means (9, 15) for transferring information to be transmitted on the data transmission bus between said first (5a) and second interfaces (5b).
